# EUROPÄISCHE PATENTSCHRIFT

(11) **EP 2 137 705 B1**
(45) Veröffentlichungstag und Bekanntmachung des Hinweises auf die Patenterteilung: **08.05.2013**
(21) Anmeldenummer: 08717718.4
(22) Anmeldetag: 13.03.2008
(51) Int. Cl.: G07C 9/00, G06F 21/00

(54) **VERFAHREN ZUR ÜBERTRAGUNG VON DATEN EINER PERSON AN EINE KONTROLLEINRICHTUNG**
METHOD FOR TRANSMITTING DATA REGARDING AN INDIVIDUAL TO A CONTROL DEVICE
PROCÉDÉ POUR TRANSMETTRE LES DONNÉES CONCERNANT UNE PERSONNE À UN DISPOSITIF DE CONTRÔLE

(30) Priorität: 14.03.2007 DE 102007012966
(43) Veröffentlichungstag der Anmeldung: 30.12.2009
(73) Patentinhaber: Bundesdruckerei GmbH, 10958 Berlin (DE)
(72) Erfinder: DRESSEL, Olaf, 14641 Wustermark (DE); BYSZIO, Frank, 16348 Wandlitz (DE); FRITZE, Frank, 12487 Berlin (DE); PAESCHKE, Manfred, 16348 Wandlitz (DE)
(74) Vertreter: Richardt Patentanwälte GbR
(86) Internationale Anmeldenummer: PCT/EP2008/052974
(87) Internationale Veröffentlichungsnummer: WO 2008/110589

(56) Entgegenhaltungen:
- WO-A-01/08111
- DE-A1- 19 604 045
- DE-A1- 19 855 596

## Beschreibung

Die Erfindung betrifft ein Verfahren zur Authentifizierung einer Person gegenüber einer Kontrolleinrichtung und gegenüber einem Gerät. Die Erfindung betrifft ferner ein Computerprogrammprodukt zur Durchführung des erfindungsgemäßen Verfahrens. Ferner betrifft die Erfindung ein portables Gerät für die Authentifizierung einer Person gegenüber der Kontrolleinrichtung.

Unter dem Begriff "Authentifizierung" versteht man den Vorgang der Überprüfung, also der Verifikation, der behaupteten Identität eines Gegenübers, beispielsweise einer Person oder eines Computersystems. Personen, die an einem Flughafen per Flugzeug ankommen, durchlaufen beispielsweise eine Passkontrolle, bevor sie das Flughafengebäude verlassen können. Dabei übergibt eine Person ihren Reisepass einem Grenzschutzbeamten, der beispielsweise das Bild im Reisepass mit dem Gesicht der Person vergleicht und somit die Person authentifiziert und im Anschluss daran die Person passieren lässt. Nachteilig daran ist, dass eine große Anzahl von Grenzschutzbeamten notwendig ist, um möglichst alle ankommenden Flugpassagiere zu kontrollieren, was hohe Personalkosten zur Folge hat.

Personen werden auch von Zugangskontrollen, z. B. zu einem sicherheitsrelevanten Bereich einer Anlage, kontrolliert und können diese nur nach erfolgter Authentifizierung passieren. Falls sich eine Person nicht gegenüber der Zugangskontrolle authentifizieren kann, wird der Person der Zugang zu dem sicherheitsrelevanten Bereich verweigert. Hierzu verwendet die Person beispielsweise auch einen Ausweis, wie etwa den Personalausweis, der von einer anderen Person oder maschinell überprüft wird. Dabei tritt jedoch das Problem auf, dass die Person, die den Ausweis verwendet, Daten von sich selbst preisgeben muss (so sind beispielsweise auf dem Personalausweis die Adresse und das Geburtsdatum der Person gespeichert), die jedoch nicht für die Durchführung der Authentifizierung vonnöten sind.

Aus der DE 198 55 596 C2 ist ein tragbarer Mikroprozessor gesteuerter Datenträger bekannt, der sowohl kontaktbehaftet auch als kontaktlos betreibbar ist. In dem tragbaren Datenträger ist für mindestens einen Speicherbereich mindestens eine Zugriffsbedingung gespeichert, die den Zugriff auf diesen Speicherbereich in Abhängigkeit davon regelt, ob der tragbare Datenträger kontaktlos oder kontaktbehaftet betrieben wird.

Aus der DE 196 04 045 A1 ist eine Vorrichtung zum Verarbeiten und Speichern von Daten bekannt mit einer ersten, kontaktbehafteten Schnittstelle und mit einer zweiten, kontaktlosen Schnittstelle zum Empfangen von Energie und zur Kommunikation mit einem Endgerät, mit einem nicht-flüchtigen Halbleiterspeicher mit einem steuerbaren Schalter, über den entweder die erste oder die zweite Schnittstelle mit dem Halbleiterspeicher über Adress-, Daten- und Kontrolleitungen verbindbar ist und die einen Übertragungsweg - selektiven Zugriff auf den Speicher ermöglicht.

Aufgabe der Erfindung ist es, ein verbessertes Verfahren zur Übertragung von Daten einer Person an eine Kontrolleinrichtung anzugeben.

Die der Erfindung zugrunde liegenden Aufgaben werden mit den unabhängigen Patentansprüchen gelöst. Erfindungsgemäße Weiterbildungen und Ausführungsformen sind in den Unteransprüchen angegeben.

Nach einer Ausführungsform der Erfindung wird ein Verfahren zur Übertragung von Daten einer Person an eine Kontrolleinrichtung angegeben, wobei die Person ein Gerät mit sich trägt, wobei das Gerät zumindest erste und zweite Schnittstellen für die Kommunikation mit der Kontrolleinrichtung aufweist. Auf dem Gerät ist festgelegt, über welche der ersten und zweiten Schnittstellen erste, bspw. personenbezogene, Daten der Person übertragen werden dürfen. Bei Annäherung des Geräts an die Kontrolleinrichtung empfängt das Gerät eine erste Anfrage von der Kontrolleinrichtung über die erste Schnittstelle, wobei mit der ersten Anfrage die Kontrolleinrichtung die ersten personenbezogenen Daten zur Authentifizierung der Person vom Gerät abfragt. Ferner erfolgt die Überprüfung, ob die ersten personenbezogenen Daten über die erste Schnittstelle übertragen werden dürfen. Die ersten personenbezogenen Daten werden über die erste Schnittstelle an die Kontrolleinrichtung übermittelt, falls die ersten personenbezogene Daten über die erste Schnittstelle übertragen werden dürfen.

Auf dem Gerät ist somit festgelegt, über welche Schnittstellen welche der personenbezogenen Daten der Person, die in dem Gerät gespeichert sind, zur Kontrolleinrichtung übermittelt werden dürfen. Fordert die Kontrolleinrichtung die ersten personenbezogenen Daten über eine Schnittstelle an, über die die ersten personenbezogenen Daten nicht übertragen werden dürfen, so werden die ersten personenbezogenen Daten nicht übertragen. Das Verfahren hat den Vorteil, das das Gerät, das der Person zugeordnet ist und von ihr getragen wird, die Kontrolle hat, welche personenbezogenen Daten über welche Schnittstellen an die Kontrolleinrichtung übertragen werden.

Erfindungsgemäß erfolgt die Festlegung, über welche der zumindest ersten und zweiten Schnittstellen die ersten Daten übertragen werden dürfen, durch Konfigurationsdaten, die nutzerdefinierbar sind. Die Person, d.h. der autorisierte Inhaber des Geräts, wird dadurch in die Lage versetzt, selbst festlegen zu können, auf welche seiner Daten er oder sie unter welchen Bedingungen einen externen Zugriff einer Kontrolleinrichtung erlauben möchte.

Der autorisierte Inhaber des Geräts erlangt damit die Datenhoheit über seine Daten, da allein der Inhaber unabhängig von der Institution, die das Gerät herausgegeben hat, und auch unabhängig von den Kontrollgeräten definieren kann, auf welche seiner Daten er oder sie den Zugriff unter welchen Bedingungen erlauben möchte.

Beispielsweise kann das Gerät als tragbarer Datenträger für Nutzerdaten verwendet werden. Das Gerät hat gleichzeitig eine Schlüsselfunktion, um gegenüber Kontrolleinrichtungen zum Beispiel Zugangsrechte zu sicherheitsrelevanten Zonen eines Gebäudes oder einer Anlage nachzuweisen. Beispielsweise kann es sich bei dem Gerät um einen USB-Stick handeln. Das Gerät kann auch in ein Dokument integriert sein, insbesondere in ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Die Kontrolleinrichtung kann an das Gerät eine Authentifizierungsanforderung senden, wonach eine Authentifizierung der Person gegenüber dem Gerät erfolgen muss. Wenn das Gerät eine solche Authentifizierungsanforderung von der Kontrolleinrichtung empfängt, so fordert es die Person zur Authentifizierung auf. Dies kann dadurch erfolgen, dass die Person eine geheime Kennung, wie zum Beispiel eine PIN, in das Gerät eingibt, oder indem biometrische Daten von der Person erfasst werden. Das erste Zertifikat wird von dem Gerät an die Kontrolleinrichtung nur dann übermittelt, falls die Authentifizierung der Person erfolgreich war.

Falls die Kontrolleinrichtung eine solche Authentifizierungsanforderung nicht an das Gerät richtet, so fordert das Gerät die Person nicht zur Authentifizierung auf, so dass das erste Zertifikat auch ohne die Authentifizierung der Person gegenüber dem Gerät an die Kontrolleinrichtung übertragen wird.

Dies hat insbesondere den Vorteil, dass eine Authentifizierung der Person gegenüber dem Gerät nur dann erfolgen muss, wenn dies erforderlich ist, um den Sicherheitsanforderungen der jeweiligen Anwendung Genüge zu tragen. Für manche Anwendungen ist es nämlich ausreichend zu prüfen, ob sich ein zulässiges Gerät im Besitz der Person befindet. Es muss aber nicht überprüft werden, ob die Person auch der rechtmäßige Besitzer des Geräts ist. Für andere Anwendungen, die höhere Sicherheitsanforderungen haben, ist es dagegen auch notwendig zu prüfen, ob die Person der rechtmäßige Besitzer des Geräts ist, so dass sichergestellt werden kann, dass das Gerät nicht etwa entwendet worden ist.

Die Erfindung ist besonders vorteilhaft, da der Aufwand für die Authentifizierung der Person gegenüber dem Gerät nur dann betrieben werden muss, wenn dies die Sicherheitsanforderungen der jeweiligen Anwendung erforderlich machen. Beispielsweise kann es in einem geschützten Gebäudebereich verschiedene Zonen geben, die unterschiedliche Sicherheitsanforderungen haben. Beispielsweise genügt für eine erste Zone einer geringen Sicherheitsstufe die Prüfung, ob die Person, welche die Kontrolleinrichtung in die erste Zone hinein passieren möchten, im Besitz eines zugelassenen Geräts ist. Diese Prüfung wird beispielsweise durch Verifikation des ersten Zertifikats durchgeführt. Das erste Zertifikat kann auch die Zonen spezifizieren, zu denen der Träger des Geräts Zugang hat. Die Kontrolleinrichtung prüft dann, neben der Validität des Zertifikats, ob die in dem Zertifikat spezifizierten Zugangsrechte ausreichend für die erste Zone sind.

Für eine andere Zone einer gehobenen Sicherheitsstufe ist es dagegen zusätzlich erforderlich, dass sich die Person gegenüber dem Gerät authentifiziert.

Von besonderem Vorteil ist ferner, dass in beiden Fällen, das heißt unabhängig von dem Erfordernis der Authentifizierung der Person gegenüber dem Gerät, die Person gegenüber der Kontrolleinrichtung anonym bleiben kann. Das erste Zertifikat, welches von dem Gerät an die Kontrolleinrichtung übermittelt wird, muss nämlich nicht zwingend die Identität der Person offen legen. Im Gegenteil kann das erste Zertifikat lediglich spezifizieren, dass der Besitzer des Geräts bestimmte Rechte hat, wie zum Beispiel Rechte zum Betreten eines geschützten Gebäudebereichs oder dergleichen.

Bei dem ersten und/oder dem zweiten Zertifikat kann es sich um Zertifikate einer sogenannten Public Key Infrastructure (PKI) handeln, wie zum Beispiel um X.509-Zertifikate. Nach Empfang des ersten Zertifikats durch die Kontrolleinrichtung kann diese das erste Zertifikat verifizieren, indem die Kontrolleinrichtung eine Zertifikatskettenprüfung durchführt. Wenn das erste Zertifikat ausreichende Rechte spezifiziert und die Zertifikatskettenprüfung erfolgreich ist, kann die Kontrolleinrichtung den Zugang zu einem geschützten Gebäudeteil, beispielsweise durch Freigabe eines Drehkreuzes oder Entriegelung einer Tür, freigeben.

Nach einer Ausführungsform der Erfindung empfängt das Gerät die Authentifizierungsanforderung zusammen mit der ersten Anfrage. Beispielsweise kann die Authentifizierungsanforderung einen integralen Bestandteil der ersten Anfrage bilden oder integraler Teil eines generellen Protokolls sein, so dass keine separate Anforderung erforderlich wird.

Nach einer weiteren Ausführungsform der Erfindung ist die Authentifizierungsanforderung Teil des zweiten Zertifikats. Das zweite Zertifikat der Kontrolleinrichtung spezifiziert also, dass eine Authentifizierung der Person gegenüber dem Gerät erforderlich ist. Das Gerät empfängt daher die Authentifizierungsanforderung durch Empfang des zweiten Zertifikats von der Kontrolleinrichtung.

Nach einer Ausführungsform der Erfindung ist die Authentifizierungsanforderung signiert, beispielsweise mit dem privaten Schlüssel, der dem zweiten Zertifikat zugeordnet ist, signiert. Dieser private Schlüssel ist beispielsweise in einem geschützten Speicherbereich der Kontrolleinrichtung gespeichert.

Bei dem zweiten Zertifikat kann es sich um ein Zertifikat einer PKI handeln, so dass das Zertifikat von der Institution, welche das Zertifikat ausgestellt hat, signiert ist. Wenn die Authentifizierungsanforderung Teil des zweiten Zertifikats ist, so ist daher auch die Authentifizierungsanforderung von dieser Signatur des zweiten Zertifikats mit abgedeckt.

Die Signierung der Authentifizierungsanforderung ist besonders vorteilhaft, da auf diese Art und Weise Manipulationen verhindert werden können. Nach Erhalt der Authentifizierungsanforderung prüft nämlich das Gerät zunächst die digitale Signatur der Authentifizierungsanforderung. Nur wenn die digitale Signatur der Authentifizierungsanforderung valide ist, kann das Gerät das erste Zertifikat an die Kontrolleinrichtung senden. Falls eine solche Verifikation der Signatur der Authentifizierungsanforderung dagegen nicht möglich ist, wird die Kontrolleinrichtung von dem Gerät als manipuliert erkannt und es findet keine weitere Kommunikation mit der Kontrolleinrichtung statt.

Nach einer Ausführungsform der Erfindung dürfen die ersten personenbezogenen Daten über die erste Schnittstelle nicht übertragen werden und die ersten personenbezogenen Daten dürfen über die zweite Schnittstelle übertragen werden. Erfindungsgemäß wird vom Gerät an die Kontrolleinrichtung signalisiert, dass die ersten personenbezogenen Daten nicht über die erste Schnittstelle übertragen werden. Ferner wird signalisiert, dass die ersten personenbezogenen Daten über die zweite Schnittstelle abfragbar sind. Damit wird der Kontrolleinrichtung mitgeteilt, über welche Schnittstelle die personenbezogenen Daten abrufbar sind.

Nach einer Ausführungsform der Erfindung wird vom Gerät der Person signalisiert, dass die Kontrolleinrichtung die ersten personenbezogenen Daten anfordert. Gegebenenfalls wird der Person ferner signalisiert, dass die personenbezogenen Daten über die zweite Schnittstelle abfragbar sind, wobei die Person aufgefordert wird, die zweite Schnittstelle (z.B. bei einer Schnittstelle für eine kabelbasierte Kommunikation) einzurichten (also z.B. das Kabel anzuschließen).

Nach einer Ausführungsform der Erfindung fragt das Gerät die Person um die Freigabe zur Übermittlung der ersten personenbezogenen Daten an die Kontrolleinrichtung, falls auf dem Gerät festgelegt ist, dass die ersten personenbezogenen Daten nicht über die erste Schnittstelle übertragen werden dürfen und falls diese Daten von der Kontrolleinrichtung über die erste Schnittstelle abgefragt werden. Damit erhält die Person die Kontrolle darüber, ob die ersten Daten über eine bestimmte Schnittstelle übertragen werden oder nicht.

Nach einer Ausführungsform der Erfindung ist auf dem Gerät festgelegt, dass die ersten personenbezogenen Daten über die erste Schnittstelle und zweite personenbezogenen Daten über die zweite Schnittstelle übertragen werden dürfen. Auf dem Gerät kann bspw. für mehrere personenbezogene Daten festgelegt sein, über welche Schnittstellen diese übertragen werden dürfen.

Nach einer Ausführungsform der Erfindung werden die ersten personenbezogenen Daten als vertraulicher eingestuft als die zweiten personenbezogenen Daten, wobei die erste Schnittstelle eine sicherere Kommunikation mit der Kontrolleinrichtung als die zweite Schnittstelle ermöglicht. Damit werden die personenbezogenen Daten entsprechend ihrem Grade der Vertraulichkeit über unterschiedlich sichere Schnittstellen und damit auch über unterschiedliche Kommunikationsprotokolle übertragen. Bspw. können die ersten/zweiten Daten den Namen der Person betreffen, wobei festgelegt ist, dass der Name auch über eine RFID-Schnittstelle übertragen werden darf. Demgegenüber mag festgelegt sein, dass Daten betreffend den Fingerabdruck der Person nur über eine USB-Verbindung übertragen werden dürfen.

Nach einer Ausführungsform der Erfindung ermöglicht die erste Schnittstelle eine Kommunikation mit der Kontrolleinrichtung innerhalb eines ersten Abstands zwischen der Kontrolleinrichtung, wobei die zweite Schnittstelle eine Kommunikation mit der Kontrolleinrichtung innerhalb eines zweiten Abstands ermöglicht, wobei der erste Abstand kleiner ist als der zweite Abstand. Damit wird festgelegt, dass der Abstand zwischen Gerät und Kontrolleinrichtung umso kleiner sein muss, je vertraulicherer die zu übertragenden personenbezogenen Daten sind.

Nach einer Ausführungsform der Erfindung betreffen die ersten Daten personenbezogene Daten, eine Gerätekennung und/oder eine der Person zugeordneten Kennung und/oder ein erstes Zertifikat, wobei die zweiten Daten nur eine Gerätekennung und/oder eine der Person zugeordneten Kennung und/oder das erste Zertifikat betreffen. Entsprechend der unterschiedlichen Abstände, innerhalb denen eine Kommunikation mit der Kontrolleinrichtung möglich ist, erfolgt eine Abstufung, welche Daten über welche Schnittstelle gesendet werden dürfen. Über die erste Schnittstelle (bspw. NFC oder USB) dürfen daher auch personenbezogene Daten, bspw. Daten betreffend einen Fingerabdruck der Person, übertragen werden. Demgegenüber darf über die zweite Schnittstelle nur eine Gerätekennung, über die das Gerät von der Kontrolleinrichtung identifizierbar ist bzw. einer der Person zugeordneten Kennung, über die die Person von der Kontrolleinrichtung identifizierbar ist, übertragen werden. Ein erstes Zertifikat, das mit den Daten gesendet wird, dient bspw. als Nachweis für die Authentizität der übermittelten Daten.

Nach einer Ausführungsform der Erfindung dürfen über eine dritte Schnittstelle, die eine Kommunikation mit der Kontrolleinrichtung innerhalb eines dritten Abstands ermöglicht, nur dritte Daten übertragen werden, wobei der dritte Abstand größer ist als der zweite Abstand und wobei die dritten Daten nur das erste Zertifikat betreffen. Dementesprechend darf nur das erste Zertifikat gesendet werden, wenn der dritte Abstand relativ groß ist, bspw., wenn über die dritte Schnittstelle eine Kommunikation nach dem GSM oder UMTS-Standard erfolgt.

Nach einer Ausführungsform der Erfindung werden die ersten personenbezogenen Daten mit einem ersten Zertifikat an die Kontrolleinrichtung übertragen, wobei die Kontrolleinrichtung die ersten personenbezogenen Daten aufgrund des ersten Zertifikats als vertrauenswürdig einstuft.

Nach einer Ausführungsform der Erfindung wird ferner eine zweite Anfrage vom Gerät an die Kontrolleinrichtung gesendet, wobei mit der zweiten Anfrage ein zweites Zertifikat von der Kontrolleinrichtung angefordert wird. Ferner erfolgt die Überprüfung des zweiten Zertifikats durch das Gerät, wobei über das zweite Zertifikat festgestellt wird, ob die Kontrolleinrichtung eine Berechtigung hat, die ersten personenbezogenen Daten vom Gerät abzufragen. Die Übermittlung der ersten personenbezogenen Daten an die Kontrolleinrichtung über die erste Schnittstelle findet nur statt, falls durch die Überprüfung des zweiten Zertifikats die Berechtigung der Kontrolleinrichtung festgestellt worden ist.

Bei dem ersten bzw. zweiten Zertifikat handelt es sich um von einer autorisierten Stelle oder Behörde (Public Key Infrastructure) herausgegebene Zertifikate, welche von der Kontrolleinrichtung bzw. dem Gerät als vertrauenswürdig eingestuft werden. Bei dem ersten bzw. zweiten Zertifikat kann es sich jeweils um kryptographisch gesicherte Datensätze handeln, die von der autorisierten Stelle bereitgestellt wurden. Die Zertifikate können ferner einen öffentlichen Schlüssel eines Schlüsselpaares für eine asymmetrische Verschlüsselung tragen. Die Zertifikate sind zudem mit einer Signatur der autorisierten Stelle versehen.

Nach einer Ausführungsform der Erfindung weist das erste Zertifikat zumindest manche der folgende Daten auf: einen öffentlichen Schlüssel eines Schlüsselpaares für eine asymmetrische Verschlüsselung, eine Kennung des Geräts, eine Kennung des Herausgebers des Zertifikats. Ferner werden die angeforderten personenbezogenen Daten mit dem Zertifikat an die Kontrolleinrichtung gesendet.

Nach einer Ausführungsform der Erfindung weist das zweite Zertifikat zumindest manche der folgende Daten auf: einen öffentlichen Schlüssel eines Schlüsselpaares für eine asymmetrische Verschlüsselung, eine Kennung der Kontrolleinrichtung, eine Kennung des Herausgebers des Zertifikats.

Bei dem Gerät kann es sich ferner um ein Gerät handeln, das von einer dazu autorisierten Stelle oder Behörde authentifiziert worden ist. Damit wird das erste Zertifikat von der Kontrolleinrichtung als vertrauenswürdig eingestuft. Auch bei der Kontrolleinrichtung kann es sich um eine automatisierte Einrichtung handeln, die authentifiziert wurde, was sich wie im ersten Zertifikat auch im zweiten Zertifikat widerspiegelt. Das zweite Zertifikat wird daher auch vom Gerät als vertrauenswürdig eingestuft und kann auch signiert sein.

Ferner kann das Gerät dazu verwendet werden, um den Benutzer gegenüber mehreren Kontrolleinrichtungen zu authentifizieren. Beispielsweise kann es sich bei einer ersten Kontrolleinrichtung um eine behördliche Kontrolleinrichtung handeln, z.B. automatisierte Passkontrolle am Flughafen, wohingegen es sich bei einer zweiten Kontrolleinrichtung um eine private Einrichtung handelt, bspw. ein Zugangssystem eines Stadions oder dergleichen.

Da die erste Kontrolleinrichtung behördliche Aufgaben wahrnimmt, hat sie viel mehr Rechte als die zweite Einrichtung. Damit darf die erste Kontrolleinrichtung über die erste Anfrage viel mehr Daten vom Gerät über die Person abfragen als die zweite Einrichtung. Damit das Gerät nicht per se auf eine erste Anfrage von irgendeiner Kontrolleinrichtung antwortet und die gewünschten Daten übermittelt, fragt das Gerät über die zweite Anfrage die Berechtigung der anfragenden Kontrolleinrichtung ab, die verlangten Daten abzufragen. Durch Erhalt des zweiten Zertifikats kann dann das Gerät feststellen, ob die anfragende Kontrolleinrichtung die entsprechende Berechtigung hat.

Nach einer Ausführungsform der Erfindung weist das Verfahren ferner den Schritt der Authentifizierung der Person gegenüber dem Gerät auf, wobei die ersten personenbezogenen Daten mit dem ersten Zertifikat nach erfolgreicher Authentifizierung der Person gegenüber dem Gerät übermittelt werden.

Um sicherzustellen, dass das Gerät von der ihm zugeordneten Person verwendet wird, wird erfindungsgemäß nach dieser Ausführungsform vom Gerät die Authentizität des Benutzers abgefragt. Erst danach erfolgt die Übermittlung des ersten Zertifikats, womit der dem Gerät zugeordnete Benutzer gegenüber der Kontrolleinrichtung authentifiziert wird.

Nach einer Ausführungsform der Erfindung wird in der ersten Anfrage oder mit der Übermittlung des zweiten Zertifikats spezifiziert, dass vor der Übermittlung der ersten personenbezogenen Daten eine Authentifizierung der Person gegenüber dem Gerät erfolgen muss.

Nach einer Ausführungsform der Erfindung fragt das Gerät vierte personenbezogene Daten von der Person ab. Zur Authentifizierung der Person gegenüber dem Gerät werden die abgefragten vierten personenbezogenen Daten vom Gerät verifiziert. Das der Person zugeordnete Gerät verifiziert daher die Authentizität der Person. Die Kontrolleinrichtung erhält somit nur die angeforderten ersten personenbezogenen Daten, die einen geringeren Vertraulichkeitsgrad aufweisen mögen als die vierten personenbezogenen Daten. Damit wird die Privatsphäre der Person gegenüber der Kontrolleinrichtung in gewissem Umfang geschützt.

Nach einer Ausführungsform der Erfindung authentifiziert sich die Person durch eine der Person zugeordneten Signaturkarte oder Chipkarte und durch Eingabe eines Pins für die Karte gegenüber dem Gerät. Das Gerät kann daher eine Aufnahmevorrichtung für eine Signaturkarte der Person aufweisen und die Person auffordern, die Signaturkarte in die Aufnahmevorrichtung einzulegen. Im Anschluss daran wird von der Person der PIN für einen Authentifizierungstoken, wie z.B. einen USB Stick, eine Signatur- oder Chipkarte eingegeben, um sich somit gegenüber dem Gerät zu authentifizieren.

Nach einer anderen Ausführungsform der Erfindung handelt sich bei den vierten personenbezogenen Daten nur um einen PIN, der für die Person von dem Gerät vergeben worden ist.

Nach einer Ausführungsform der Erfindung handelt es sich bei den vierten personenbezogenen Daten um biometrische Daten der Person, wobei die biometrischen Daten auf dem Gerät hinterlegt sind. Zur Authentifizierung der Person gegenüber dem Gerät fragt das Gerät von der Person, die das Gerät gerade benutzt, die entsprechenden biometrische Daten ab. Diese abgefragten biometrischen Daten werden sodann mit den hinterlegten biometrischen Daten verglichen, um somit die Identität zwischen dem Benutzer des Geräts und der Person, für die das Gerät authentifiziert worden ist, nachzuweisen. Bei den biometrischen Daten handelt es sich beispielsweise um Daten betreffend einen Fingerabdruck der Person, für die das Gerät authentifiziert ist. Entsprechend wird von der Person, die das Gerät benutzt, ein Fingerabdruck eingescannt. Die somit gewonnenen biometrischen Daten werden mit den hinterlegten biometrischen Daten betreffend den Fingerabdruck verglichen. Alternativ kann es sich bei den hinterlegten biometrischen Daten um Daten betreffend einen Iris-Scan, eine DNA-Sequenz oder um ein Gesichtsmerkmal der Person handeln, für die das Gerät authentifiziert worden ist.

Nach einer Ausführungsform der Erfindung sind die ersten und/oder zweiten personenbezogenen Daten auf dem Gerät gespeichert, oder die ersten und/oder zweiten personenbezogenen Daten werden von der Person abgefragt.

Nach einer Ausführungsform handelt es sich bei den ersten Daten nur um die erste Signatur, wodurch die Person von der Kontrolleinrichtung authentifiziert werden kann, ohne dass personenbezogene Daten der Person an die Kontrolleinrichtung übermittelt werden.

Nach einer Ausführungsform der Erfindung handelt es sich bei den ersten und/oder zweiten personenbezogenen um den Namen der Person, um das Geburtsdatum der Person, die Wohnadresse der Person oder um biometrische Daten der Person, wie etwa Daten in Bezug auf den Fingerabdruck, das Irismuster oder die DNA-Sequenz der Person.

Nach einer Ausführungsform der Erfindung handelt es sich bei den zumindest ersten und zweiten Schnittstellen um Schnittstellen für eine kontaktlose oder kontaktbasierte Kommunikation zwischen dem Gerät und der Kontrolleinrichtung. Beispielsweise hat das Gerät kontaktlose Kommunikationsschnittstellen, die die Kommunikation zur Kontrolleinrichtung mittels dem Bluetooth-, dem WLAN-, dem WiMAX-, dem RFID-, dem GSM-, dem GPRS- oder dem UMTS-Standard ermöglichen. Das Gerät kann auch kontaktbehaftete Schnittstellen, wie etwa einen USB-Port oder einen Card-Connector, aufweisen. Das Gerät entscheidet anhand der Kommunikationsschnittstelle bzw. anhand des Protokolls, das zur Übertragung des personenbezogenen Daten verwendet wird, ob die personenbezogenen Daten an die Kontrolleinrichtung über diese Kommunikationsschnittstelle gesendet werden oder ob diese nicht aufgrund der "falschen Kommunikationsschnittstelle" nicht gesendet werden.

Die oben angegebenen Standards haben unterschiedliche Reichweiten, innerhalb denen eine Kommunikation des Geräts zur Kontrolleinrichtung durchgeführt werden kann. Das Gerät kann nun in Abhängigkeit vom verwendeten Kommunikationsstandard und damit in Abhängigkeit vom Abstand zur Kontrolleinrichtung die personenbezogenen Daten senden oder nicht. Beispielsweise kann auf dem Gerät spezifiziert sein, dass, falls sensible Daten (Fingerabdruckdaten, etc.) einer Person von der Kontrolleinrichtung abgefragt werden, diese nur über eine kontaktbehaftete Kommunikation, z.B. über den USB-Port, übertragen werden, während andere Daten, wie etwa der Name der Person, auch über einen GSM-Kanal gesendet werden dürfen.

Nach einer Ausführungsform der Erfindung wird das Gerät aufgrund der ersten Schnittstelle von der Kontrolleinheit detektiert, wobei die Kontrolleinheit aufgrund der Detektion des Geräts über die erste Schnittstelle die erste Anfrage an das Gerät sendet.

In einem weiteren Aspekt betrifft die Erfindung Computerprogrammprodukte mit computerausführbaren Instruktionen zur Durchführung der erfindungsgemäßen Verfahren.

In einem anderen Aspekt betrifft die Erfindung ein portables Gerät zur Übertragung von Daten einer Person an eine Kontrolleinrichtung.

In einem anderen Aspekt betrifft die Erfindung ein Dokument mit einem erfindungsgemäßen Gerät. Bei dem Dokument handelt es sich insbesondere um ein Wert- oder Sicherheitsdokument, wie z.B. einen Ausweis oder eine Berechtigungskarte oder eine Eintrittskarte. Das Gerät kann bspw. in ein Ausweisdokument, z.B. einen Reisepass, integriert sein.

Im Weiteren werden bevorzugte Ausführungsformen der Erfindung mit Bezugnahme auf die Zeichnungen näher erläutert. Es zeigen:
- Fig. 1: ein schematisches Blockdiagramm einer Kontrolleinrichtung und eines Geräts,
- Fig. 2: ein Flussdiagramm, das Schritte des erfindungsgemäßen Verfahrens grafisch wiedergibt,
- Fig. 3: ein Blockdiagramm eines Geräts,
- Fig. 4: ein Gerät für die Übertragung der Daten einer Person an eine Kontrolleinrichtung,
- Fig. 5: ein Ablaufdiagramm, welches Schritte, die bei Ausführung der erfindungsgemäßen Verfahren durchgeführt werden, wiedergibt,
- Fig. 6: illustrativ die Erfassungsbereiche, innerhalb derer ein Gerät in Abhängigkeit vom Typ der verwendeten Schnittstelle von einer Kontrolleinrichtung detektiert werden kann und innerhalb derer bestimmte personenbezogene Daten übermittelt werden dürfen.

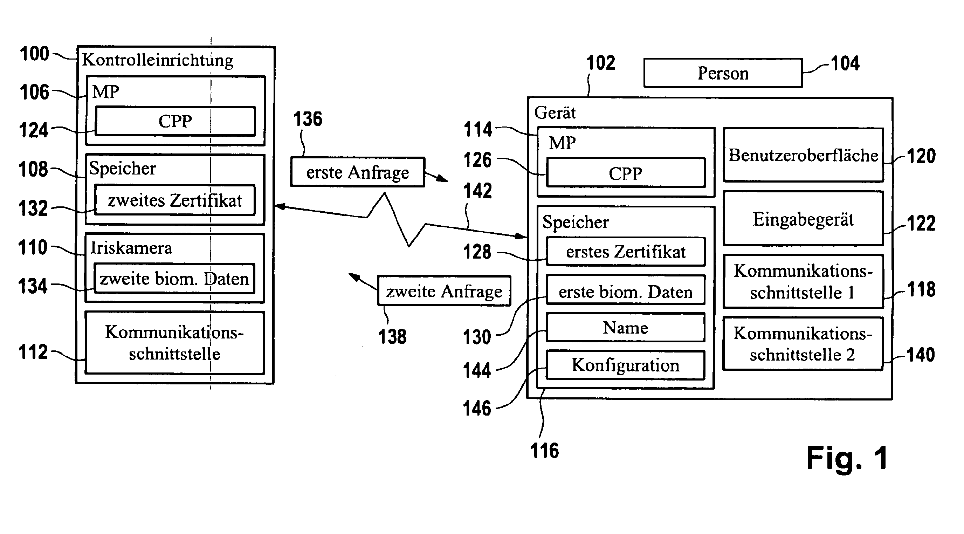

Fig. 1 zeigt schematisch ein Blockdiagramm einer Kontrolleinrichtung 100 und eines Geräts 102. Die Kontrolleinrichtung 100 hat einen Mikroprozessor 106, einen Speicher 108, eine Iriskamera 110 und eine Kommunikationsschnittstelle 112. Das Gerät 102 hat einen Mikroprozessor 114, einen Speicher 116, eine erste Kommunikationsschnittstelle 118, eine zweite Kommunikationsschnittstelle 140, eine Benutzeroberfläche 120 und ein Eingabegerät 122. Das Gerät 102 ist portabel und wird von einer Person 104 getragen.

Betritt die Person 104 mit dem Gerät 102 einen Erfassungsbereich der Kontrolleinrichtung 100, so kann die Kontrolleinrichtung 100 bspw. über die erste Kommunikationsschnittstelle 112 die Anwesenheit des Geräts 102 detektieren. Der Erfassungsbereich hängt dabei ab von der Übertragungstechnologie, die in der ersten Kommunikationsschnittstelle 112 implementiert ist und über die das Gerät 102 detektiert wird. Insbesondere kann das Gerät bereits über die erste Kommunikationsschnittstelle 118 (bspw. für Bluetooth) detektiert werden, wohingegen es noch nicht über die zweite Kommunikationsschnittstelle 140 (bspw. für near field communciation (NFC)) detektierbar ist.

Es wird dabei angenommen, dass die Kommunikationsschnittstelle 112 kompatibel ist mit der Kommunikationsschnittstelle 118, also beispielsweise beide Kommunikationsschnittstellen für die Kommunikation mit Bluetooth vorgesehen sind. Die Detektion des Geräts 102 durch die Kontrolleinrichtung kann beispielsweise durch den im Bluetooth-Standard angegebenen Discovery-Modus erfolgen.

Um die Authentizität des Geräts 102 bzw. der Person 104 festzustellen, führt der Mikroprozessor 106 ein Computerprogrammprodukt 124 aus, welches auf dem Speicher 108 permanent gespeichert ist und zur Ausführung in den Mikroprozessor geladen wird. Komplementär dazu führt das Gerät 102 bzw. der Mikroprozessor 114 des Geräts 102 ein Computerprogrammprodukt 126 aus, welches auf dem Speicher 116 gespeichert ist und zur Ausführung in den Mikroprozessor 114 geladen wird.

Nach der Detektion des Geräts 102 im Erfassungsbereich sendet das Computerprogrammprodukt 124 eine erste Anfrage 136 über die Kommunikationsschnittstelle 112 und über eine Luftschnittstelle 142 an die Kommunikationsschnittstelle 118, so dass die erste Anfrage 136 vom Gerät 102 empfangen wird. Mit der ersten Anfrage 118 fordert die Kontrolleinrichtung 100 bspw. den Namen 144 der Person 104 vom Gerät 102 an, mit dem die Authentizität des Geräts 102 bzw. der Person 104 gegenüber der Kontrolleinrichtung 100 nachgewiesen wird. Nach der hier beschriebenen Ausführungsform ist der Name 144 auf dem Speicher 116 gespeichert.

Nach Empfang der ersten Anfrage 136 überprüft das Computerprogrammprodukt 126, ob der Name 144 über die erste Kommunikationsschnittstelle 118 (bspw. Bluetooth) übertragen werden darf. Ist dies der Fall, dann wird der Name 144 über die erste Kommunikationsschnittstelle 118 übermittelt, andernfalls nicht.

Erfragt die Kontrolleinrichtung bspw. über die erste Kommunikationsschnittstelle 118 erste biometrischen Daten 130 vom Gerät 102, beispielsweise Daten in Bezug auf den Fingerabdruck der Person 104, die auch auf dem Speicher 116 gespeichert sind, so überprüft das Computerprogrammprodukt 126, ob diese über die erste Kommunikationsschnittstelle 118 (bspw. Bluetooth) übertragen werden dürfen. Bei den ersten biometrischen Daten 130 handelt es sich um vertrauenswürdigere Daten als der Name und so kann festgelegt sein, dass diese Daten nicht über die erste Kommunikationsschnittstelle 118 übertragen werden dürfen, wohl aber über die zweite Kommunikationsschnittstelle 140 (z.B. für NFC).

Ein Kriterium zur Festlegung, welche personenbezogenen Daten über welche Schnittstelle übertragen werden dürfen, kann der maximale Abstand zwischen Kontrolleinrichtung 100 und Gerät 102 sein, innerhalb dessen ein Kommunikation über die entsprechende Schnittstelle noch möglich ist.

Die angeforderten personenbezogenen Daten werden gegebenenfalls mit einem ersten Zertifikat 128 an die Kontrolleinrichtung übermittelt. Durch das erste Zertifikat 128, das bspw. signiert ist, werden die personenbezogenen Daten von der Kontrolleinrichtung als vertrauenswürdig eingestuft.

Gemäß einer Ausführungsform der Erfindung sendet nach Empfang der ersten Anfrage 136 das Computerprogrammprodukt 126 eine zweite Anfrage 138 über die Kommunikationsschnittstelle 118 und die Luftschnittstelle 142 an die Kontrolleinrichtung 100, wo sie über die Kommunikationsschnittstelle 112 empfangen wird. Mit der zweiten Anfrage 138 fordert das Gerät 102 ein zweites Zertifikat 132 von der Kontrolleinrichtung an, über das die Kontrolleinrichtung 100 gegenüber dem Gerät 102 einen Nachweis erbringt, dass es berechtigt ist, die personenbezogenen Daten, z.B. den Namen, vom Gerät 102 anzufordern. Das zweite Zertifikat 132 ist dabei auf dem Speicher 108 gespeichert. Nach Erhalt der zweiten Anfrage 138 übermittelt die Kontrolleinrichtung 100 das zweite Zertifikat 132 an das Gerät 102.

Das Computerprogrammprodukt 126 überprüft das zweite Zertifikat 132, das von einer autorisierten Stelle authentifiziert ist, und stellt somit fest, ob die Kontrolleinrichtung 100 berechtigt ist, die personenbezogenen Daten, bspw. den Namen 144, vom Gerät 102 anzufordern. Falls dies der Fall ist, werden die personenbezogenen Daten an die Kontrolleinrichtung 100 gesendet, wodurch sich das Gerät 102 bzw. die Person 104, die das Gerät mit sich trägt, gegenüber der Kontrolleinrichtung 100 authentifiziert.

In der ersten Anfrage 136, die von der Kontrolleinrichtung 100 an das Gerät 102 übermittelt worden ist, kann das Computerprogrammprodukt 124 ferner spezifiziert haben, dass vor Übermittlung der darin spezifizierten personenbezogenen Daten eine Authentifizierung der Person 104 gegenüber dem Gerät 102 erfolgen muss. Das Gerät 102 ist für eine bestimmte Person beispielsweise von einer Authentifizierungsbehörde authentifiziert und damit einer bestimmten Person eineindeutig zugeordnet.

Auf dem Speicher 116 sind, wie bereits oben erwähnt, erste biometrische Daten 130 der dem Gerät 102 zugeordneten Person hinterlegt. Zur Verifizierung, dass es sich bei der Person 104 um die dem Gerät 102 zugeordneten Person handelt, weist das Gerät 102 das Eingabegerät 122 auf, bei dem es sich beispielsweise um einen Scanner für Fingerabdrücke handelt. Dementsprechend handelt es sich bei den ersten biometrischen Daten 130 um Daten betreffend den Fingerabdruck der dem Gerät 102 zugeordneten Person. Die Person 104, die das Gerät mit sich trägt, wird somit über die Benutzeroberfläche 120 aufgefordert, den Finger auf das Eingabegerät 122 (Scanner) zu legen, so dass Daten in Bezug auf den Fingerabdruck der Person 104 generiert werden können, die mit den ersten biometrischen Daten 130 sodann verglichen werden, wodurch die Authentizität der Person 104 nachgewiesen werden kann. Nur wenn die von der Person 104 ermittelten Daten hinsichtlich des Fingerabdrucks mit den ersten biometrischen Daten 130 übereinstimmen, werden die gewünschten personenbezogenen Daten an die Kontrolleinrichtung 100 gesendet, wodurch sich die erste Person 104 gegenüber der Kontrolleinrichtung 100 authentifiziert hat.

Alternativ kann es sich bei den personenbezogenen Daten um einen PIN handeln, der auf dem Speicher 116 gespeichert ist und nur der Person, der das Gerät 102 zugeordnet ist, bekannt ist. Die Person 104, die das Gerät 102 mit sich trägt, wird sodann über die Benutzeroberfläche 120 aufgefordert, den PIN in das Eingabegerät 122, das nach diesem Beispiel einer Tastatur entspricht, einzugeben. Falls der eingegebene PIN mit dem auf dem Speicher 116 hinterlegten PIN übereinstimmt, erfolgt die Übermittlung des ersten Zertifikats 128 an die Kontrolleinrichtung 100.

Bei dem Gerät 102 kann es sich auch um ein relativ kleines Gerät 102 handeln, bei dem aus Gründen der Miniaturisierung keine Benutzeroberfläche 120 und kein Eingabegerät 122 vorgesehen sind. Um biometrische Daten der Person 104 zur Authentifizierung der Person 104 gegenüber der Kontrolleinrichtung 100 zu verwenden, weist die Kontrolleinrichtung 100 die Iriskamera 110 auf, mit der ein Bild der Iris der Person 104 gemacht wird, woraus zweite biometrische Daten 134 betreffend die Iris der Person 104 ermittelt werden. Die zweiten biometrischen Daten 134 werden sodann von der Kontrolleinrichtung 100 an das Gerät 102 übertragen, wo die zweiten biometrischen Daten 134 mit den ersten biometrischen Daten 130, die in diesem Falle Daten betreffend die Iris der Person, die dem Gerät 102 zugeordnet ist, betreffen, verglichen. Nur wenn die zweiten biometrischen Daten 134 mit den ersten biometrischen Daten 130 übereinstimmen, werden die von der Kontrolleinrichtung abgefragten personenbezogenen Daten an die Kontrolleinrichtung 100 gesendet und damit die Person 104 gegenüber der Kontrolleinrichtung 100 authentifiziert.

In dem Speicher 116 des Geräts 102 sind Konfigurationsdaten 146 gespeichert. Durch die Konfigurationsdaten wird festgelegt, welche Bedingungen erfüllt sein müssen, damit bestimmte Daten der Person 104, die in dem Speicher 116 gespeichert sind, über eine der verfügbaren Kommunikationsschnittstellen, hier die Kommunikationsschnittstelle 118 oder 140, an die Kontrolleinrichtung 100 gesendet werden können. Die Konfigurationsdaten 146 sind nutzerdefinierbar und können über die Benutzeroberfläche 120 von der Person 104 in den Speicher 116 eingegeben oder editiert werden. Bevor die Person 104 über die Nutzeroberfläche 120 die Konfigurationsdaten 146 eingeben oder editieren kann, muss sich die Person 104 zunächst gegenüber dem Gerät 102 authentifizieren, beispielsweise durch Eingabe der PIN oder durch Erfassung der zweiten biometrischen Daten.

Die unten stehende Tabelle I zeigt exemplarisch eine Ausführungsform der Konfigurationsdaten 146. In jeder Zeile der Tabelle I ist einem bestimmten Daten-Element eine Bedingung zugeordnet, welche erfüllt sein muss, damit das Daten-Element über eine ebenfalls in der Tabelle spezifizierte Kommunikationsschnittstelle zu der Kontrolleinrichtung 100 übertragen werden kann.

Für ein erstes Datenelement, d.h. eine Mobiltelefonnummer, hat die Person 104 in den Konfigurationsdaten 146 spezifiziert, dass deren Vertraulichkeit absolut sein soll, das heißt unter keinen Umständen wird die in dem Speicher 116 des Geräts 102 gespeicherte Mobiltelefonnummer an die Kontrolleinrichtung 100 übertragen.

Für ihren Namen und Vornamen hat die Person 104 spezifiziert, dass deren Übermittlung über die Kommunikationsschnittstelle 140 von dem Gerät 102 an die Kontrolleinrichtung 100 möglich sein soll, aber nur, nachdem die Kontrolleinrichtung 100 hierfür ausreichende Zugriffsrechte nachgewiesen hat. Den Nachweis dieser Zugriffsrechte kann die Kontrolleinheit 100 dadurch erbringen, dass sie auf die zweite Anfrage 138 des Geräts 102 mit dem zweiten Zertifikat 132 antwortet, wobei das zweite Zertifikat 132 die Zugriffsrechte der Kontrolleinrichtung 100 auf die in dem Speicher 116 des Geräts 102 gespeicherten Daten der Person 104 spezifiziert. Beispielsweise sind in dem Zertifikat 132 die Namen der Daten-Elemente angegeben, auf die die Kontrolleinrichtung Zugriffsrechte haben soll.

Einer Anfrage 136 der Kontrolleinrichtung 100 an das Gerät 102 zur Übermittlung von Namen und Vornamen der Person 104 über die Kommunikationsschnittstelle 140 wird von dem Gerät 102 also dann entsprochen, wenn die Kontrolleinrichtung 100 aufgrund der Anfrage 138 des Geräts 102 ein Zertifikat 132 übermittelt, welches Zugriffsrechte der Kontrolleinrichtung 100 auf den Namen und den Vornamen spezifiziert.

Für ihr Geburtsdatum hat die Person 104 in den Konfigurationsdaten 146 dagegen festgelegt, dass eine Übermittlung an die Kontrolleinrichtung 100 sowohl über die Kommunikationsschnittstelle 118 als auch über die Kommunikationsschnittstelle 140 möglich ist. Die Voraussetzung hierfür ist, dass die anfragende Kontrolleinrichtung 100 die hierzu erforderlichen Zugriffsrechte nachgewiesen hat, beispielsweise durch Übermittlung von deren Zertifikat 132, welches Zugriffsrechte auf das Geburtstagsdatum spezifiziert. Als weitere Voraussetzung für die Übermittlung des Geburtsdatums hat die Person 104 in den Konfigurationsdaten 146 spezifiziert, dass die Kontrolleinrichtung 100 zu einer Behörde gehören muss. Die Zugehörigkeit der Kontrolleinrichtung zu einer Behörde kann ebenfalls in dem zweiten Zertifikat 132 angegeben sein.

Für ihre Adresse hat die Person 104 in den Konfigurationsdaten 146 spezifiziert, dass diese prinzipiell nur über die Kommunikationsschnittstelle 118 übermittelt werden kann, und zwar nur an Kontrolleinrichtungen 100 bestimmter Behörden oder anderer Institutionen, die in den Konfigurationsdaten 146 explizit aufgelistet sind. Zusätzlich muss eine anfragende Kontrolleinrichtung 100 deren Zugriffsrechte für den Zugriff auf die Adresse nachweisen, beispielsweise durch Übermittlung des Zertifikats 132, welches entsprechende Zugriffsrechte spezifizieren muss. Ferner kann das Zertifikat 132 auch angeben, zu welcher Behörde oder Institution die Kontrolleinrichtung 100 gehört.

Die Adresse der Person 104 wird von dem Gerät 102 also nur dann an eine anfragende Kontrolleinrichtung 100 übermittelt, wenn die Kontrolleinrichtung 100 anhand ihres Zertifikats 132 nachweisen kann, dass sie die erforderlichen Zugriffsrechte zum Zugriff auf die Adresse hat, und ferner zu einer Behörde oder Institution gehört, die zu den für die Adresse in den Konfigurationsdaten 146 aufgelisteten Behörden oder Institutionen gehört.

Alternativ oder zusätzlich können weitere Voraussetzungen für die Übertragung anderer in dem Speicher 116 gespeicherter Daten in den Konfigurationsdaten 146 spezifiziert sein.

Durch die Möglichkeit über die Konfigurationsdaten 146 die Vorraussetzungen festlegen zu können, die für die Übertragung von Daten aus dem Speicher 116 an die Kontrolleinrichtung 100 erfüllt sein müssen, erhält die Person 104 die Datenhoheit über ihre persönlichen Daten. Selbst wenn es sich bei der Kontrolleinrichtung 100 um eine Kontrolleinrichtung einer Behörde oder einer staatlichen Institution handelt, so gibt das Gerät 102 doch nur Daten aus dem Speicher 116 dann preis, wenn die Kontrolleinrichtung 100 die hierfür in den Konfigurationsdaten 146 definierten Voraussetzungen erfüllt.

Um der Person 104 die Konfiguration des Geräts 102 zu erleichtern, kann dieses im Lieferzustand eine vorgegebene Standardkonfiguration aufweisen. Die Konfigurationsdaten 146 dieser Standardkonfiguration können von der Person 104 an deren individuelle Datenschutzbedürfnisse angepasst werden.

**Tabelle I**

| Daten | Vertraulichkeit |
|---|---|
| Mobiltelefonnummer | absolut |
| Vorname, Name | Übermittlung über Kommunikationsschnittstelle 140, nachdem Kontrolleinrichtung Zugriffsrechte nachgewiesen hat |
| Geburtsdatum | Übermittlung über Kommunikationsschnittstelle 118 oder 140, nachdem Kontrolleinrichtung Zugriffsrechte nachgewiesen hat, und Kontrolleinrichtung zu einer Behörde gehört |
| Adresse | Übermittlung über Kommunikationsschnittstelle 118 nur an Kontrolleinrichtungen aufgelisteter Behörden oder Institutionen, wenn Zugriffsrechte nachgewiesen sind; Liste der Behörden oder Institutionen =... |
| ... | ... |

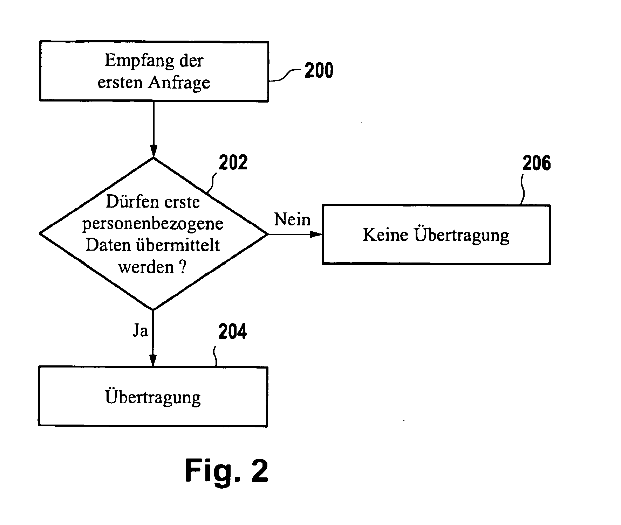

Fig. 2 zeigt ein Flussdiagramm, das Schritte des erfindungsgemäßen Verfahrens zur Authentifizierung einer Person gegenüber einer Kontrolleinrichtung zeigt, wobei die Person ein Gerät mit sich trägt, wobei das Gerät zumindest erste und zweite Schnittstellen für die Kommunikation mit der Kontrolleinrichtung aufweist, wobei auf dem Gerät festgelegt ist, über welche der ersten und zweiten Schnittstellen erste personenbezogenen Daten übertragen werden dürfen, wobei das Gerät bei einer Annäherung an die Kontrolleinrichtung in Schritt 200 des Verfahrens eine ersten Anfrage von der Kontrolleinrichtung über die erste Schnittstelle empfängt, wobei mit der ersten Anfrage die Kontrolleinrichtung die ersten personenbezogenen Daten zur Authentifizierung der Person vom Gerät abfragt. In Schritt 202 erfolgt die Überprüfung durch das Gerät, ob die ersten personenbezogenen Daten über die erste Schnittstelle übertragen werden dürfen. Falls dies der Fall ist, erfolgt in Schritt 204 die Übermittlung der ersten personenbezogenen Daten über die erste Schnittstelle an die Kontrolleinrichtung. Andernfalls wird das Verfahren mit Schritt 206 fortgesetzt, wobei keine Übertragung der ersten personenbezogenen Daten erfolgt.

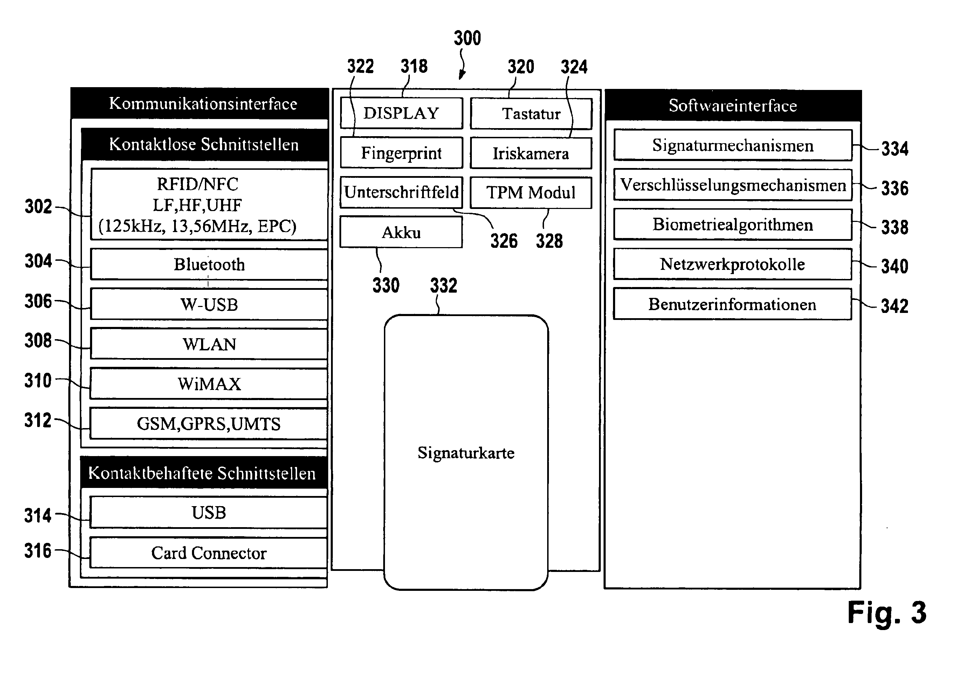

Fig. 3 zeigt ein Blockdiagramm eines Geräts 300. Das Gerät 300 weist mehrere Kommunikationsinterfaces (Kommunikationsschnittstellen) auf. Die Kommunikationsschnittstellen lassen sich in kontaktlose und kontaktbehaftete Schnittstellen unterteilen, wobei über kontaktlose Schnittstellen eine Funkverbindung zu einer entsprechenden Kontrolleinrichtung etabliert wird, während bei kontaktbehafteten Schnittstellen eine galvanische Verbindung oder ein körperlicher anderer Kontakt zwischen dem Gerät und der Kontrolleinrichtung besteht.

An kontaktlosen Schnittstellen weist das Gerät 300 eine RFID-(Radio Frequency Identification) bzw. NFC-(Near Field Communication)-Schnittstelle 302 auf. Ferner weist das Gerät eine Schnittstelle 304 für Bluetooth auf. Darüber hinaus hat das Gerät Schnittstellen 306, 308, 310 und 312 für Wireless-USB (W-USB), WLAN, WiMAX bzw. GSM, GPRS, UMTS.

An kabelbehafteten Schnittstellen weist das Gerät eine USB-Schnittstelle 314 und einen Card Connector 316 auf. Der Vorteil von mehreren Schnittstellen ist, dass das Gerät 300 eine Kommunikation mit relativ vielen Kontrolleinrichtungen, die ja nicht über alle Schnittstellen verfügen müssen, aufnehmen kann. Das Gerät 300 ist daher sehr flexibel einsetzbar.

Das Gerät 300 weist ferner ein Display 318 auf, der verwendet wird, um mit der Person, die das Gerät 300 mit sich trägt, zu kommunizieren. Um eine Eingabe, beispielsweise die Eingabe eines PINs, zu ermöglichen, hat das Gerät zudem eine Tastatur 320. Das Gerät hat einen Scanner 322 zur Aufnahme eines Fingerprints (Fingerabdrucks) der Person bzw. eine Iriskamera 324, um ein Bild der Iris der Person, die das Gerät 300 mit sich trägt, zu machen. Das Gerät hat ferner ein Unterschriftenfeld 326, so dass die Person eine Unterschrift auf dem Gerät 300 hinterlegen kann.

Ferner verfügt das Gerät 300 über ein TPM-Modul 328. Das Akronym TPM steht für Trusted Platform Module. Ein TPM-Modul 328 ist im Wesentlichen ein Chip, der als Teil einer TCG-Spezifikation auf dem Gerät 300 implementiert ist. Das TPM-Modul 328 kann als eine fest eingebaute Smartcard angesehen werden, mit dem Unterschied, dass das TPM-Modul nicht an einen konkreten Benutzer, sondern an das Gerät 300 gebunden ist. Das TPM-Modul 328 ist passiv und kann weder den Boot-Vorgang noch den Betrieb des Geräts 300 direkt beeinflussen. Auf dem TPM-Modul 328 ist eine eindeutige Kennung hinterlegt, die zur Identifizierung des Geräts 300 verwendet werden kann.

Das Gerät 300 hat ferner einen Akkumulator (Akku) 330, der die elektrische Energie zum Betrieb des Geräts 300 bereitstellt. Ferner verfügt das Gerät 300 über eine Aufnahmevorrichtung für eine Signaturkarte 332, die die Person, die das Gerät 300 mit sich trägt, einstecken kann und sich somit durch Eingabe eines PINs betreffend die Signaturkarte 332 gegenüber dem Gerät authentifizieren kann.

Zur Durchführung des erfindungsgemäßen Verfahrens, wie zuvor beschrieben, weist das Gerät 300 ferner ein oder mehrere Computerprogramme auf, vergleiche hierzu das Computerprogrammprodukt 126 in Figur 1. Das Computerprogrammprodukt weist computerausführbare Instruktionen auf, in denen Mechanismen zur Signaturmechanismen 334 zur Signierung von Nachrichten, wie beispielsweise die zweite Anfrage 138 (vergleiche Fig. 1), die vom Gerät 300 an eine Kontrolleinrichtung gesendet wird. Entsprechend weist das Computerprogrammprodukt Instruktionen zur Durchführung von Verschlüsselungsmechanismen 336, von Biometriealgorithmen 338, von Netzwerkprotokollen 340 und zur Erfassung von Benutzerinformationen 342, bspw. über die Tastatur 320, auf.

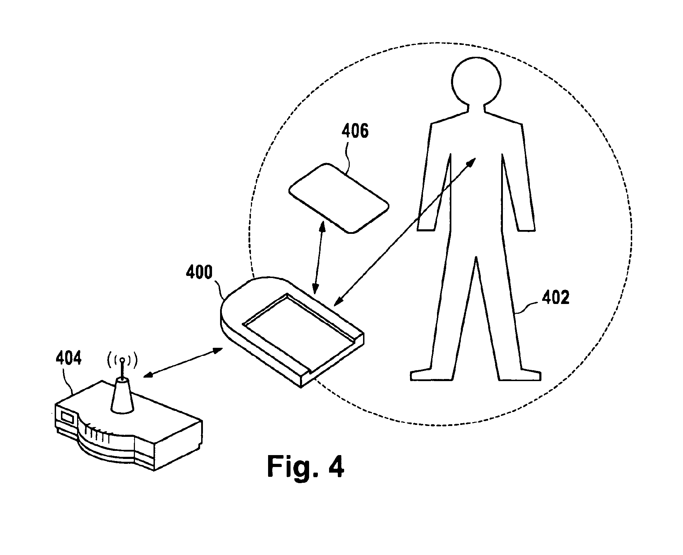

Fig. 4 zeigt illustrativ ein Gerät 400 für die Authentifizierung einer Person 402 gegenüber einer Kontrolleinrichtung 404. Wie bereits zuvor beschrieben, kann der Prozess der Authentifizierung der Person 402 gegenüber der Kontrolleinrichtung 404 erfordern, dass sich die Person 402 gegenüber dem Gerät 400 authentifiziert. Das Gerät 400 weist dazu eine Aufnahmevorrichtung oder zumindest ein Lesegerät für eine Signaturkarte 406 der Person auf. Das Lesegerät 400 liest, nachdem die Person 402 ihre Signaturkarte 406 dem Gerät 400 zugeführt hat, die auf der Signaturkarte 406 hinterlegten Daten ab und erfragt von der Person 402 einen der Signaturkarte 406 zugeordneten PIN. Gibt die Person 402 den der Signaturkarte 406 zugeordneten, richtigen PIN ein, so hat sich die Person 402 gegenüber dem Gerät 400 authentifiziert und das Gerät kann dann das erste Zertifikat an die Kontrolleinrichtung 404 übermitteln, um somit der Kontrolleinrichtung 404 anzuzeigen, dass es sich bei der Person 402 tatsächlich um die dem Gerät 400 zugeordneten Person handelt.

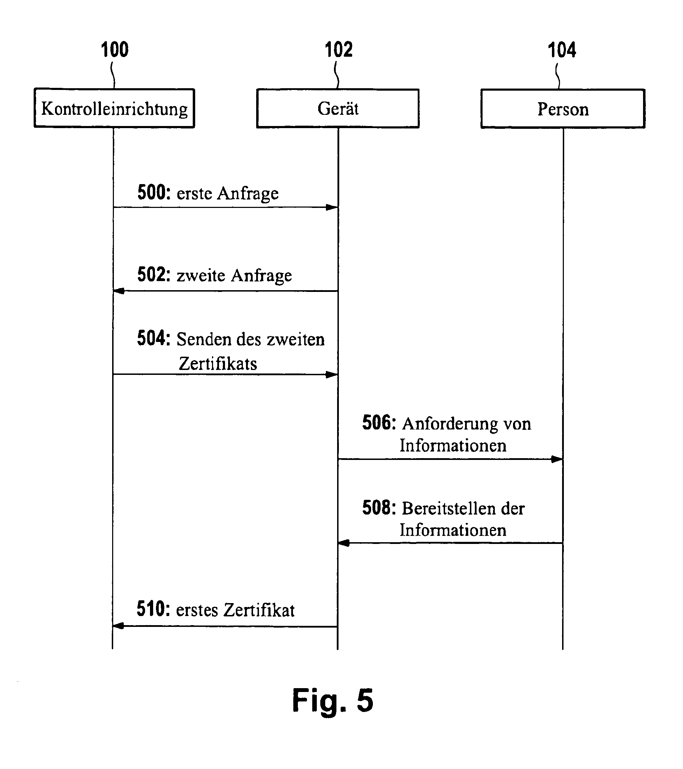

Fig. 5 zeigt in einem Ablaufdiagramm Schritte, die bei Ausführung des erfindungsgemäßen Verfahrens von der Kontrolleinrichtung 100, dem Gerät 102 bzw. der Person 104 durchgeführt werden. Dabei wurden für die Kontrolleinrichtung, das Gerät und die Person die aus Fig. 1 bekannten Bezugszeichen verwendet. Nachdem die Kontrolleinrichtung 100 die Anwesenheit des Geräts 102 detektiert hat, sendet in Schritt 500 die Kontrolleinrichtung eine erste Anfrage an das Gerät 102, wobei mit der ersten Anfrage die Kontrolleinrichtung ein erstes Zertifikat zur Authentifizierung der Person 104, die das Gerät 102 mit sich trägt, anfordert. Nach Empfang der ersten Anfrage sendet in Schritt 502 das Gerät 102 eine zweite Anfrage an die Kontrolleinrichtung 100, wobei mit der zweiten Anfrage das Gerät 102 ein zweites Zertifikat von der Kontrolleinrichtung 100 anfordert. In Schritt 504 sendet die Kontrolleinrichtung 100 das zweite Zertifikat an das Gerät 102. In der ersten Anfrage (siehe Schritt 500) oder mit dem Senden des zweiten Zertifikats (siehe Schritt 504) kann das Gerät 102 ferner von der Kontrolleinrichtung 100 angewiesen worden sein, dass sich die Person 104 gegenüber dem Gerät 102 authentifizieren muss.

Das Gerät 102 fordert sodann in Schritt 506 Informationen von der Person 104 an, damit das Gerät 102 die Person 104 authentifizieren kann. Beispielsweise kann das Gerät 102 von der Person 104 einen PIN oder einen Fingerabdruck oder dergleichen abfragen. In Schritt 508 stellt die Person 104 dem Gerät 102 die angeforderten Informationen bereit. Das Gerät 102 verifiziert intern, ob die von der Person 104 bereitgestellten Informationen, den Informationen entsprechen, die auf dem Gerät 102 hinsichtlich der Person 104 hinterlegt sind, beispielsweise ob ein auf dem Gerät 102 hinterlegter PIN dem von der Person eingegebenen PIN entspricht. Ist dies der Fall, so sendet das Gerät 102 das erste Zertifikat in Schritt 510 an die Kontrolleinrichtung 100, wodurch die erste Person 104 gegenüber der Kontrolleinrichtung 100 authentifiziert werden kann. Dadurch erübrigt sich die Übertragung von irgendwelchen personenbezogenen Daten der Person an die Kontrolleinrichtung, da das Gerät die Person authentifiziert hat und das erste Zertifikat von der Kontrolleinrichtung als vertrauenswürdig eingestuft wird.

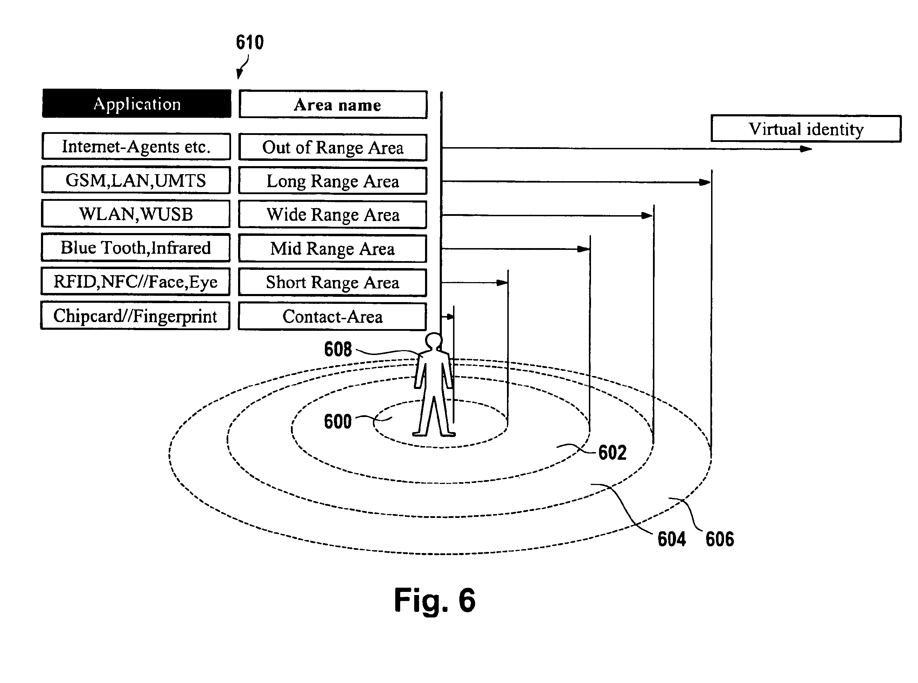

Fig. 6 zeigt illustrativ die Erfassungsbereiche 600, 602, 604, 606, innerhalb derer ein Gerät bzw. eine Person 608, die das Gerät mit sich trägt, in Abhängigkeit vom Typ der verwendeten Schnittstelle von einer Kontrolleinrichtung detektiert werden kann und innerhalb derer bestimmte personenbezogene Daten übermittelt werden.

In einer Tabelle 610 sind ferner in der linken Spalte Kommunikationstechnologien bzw. Protokolle angegeben, über die eine Kommunikation innerhalb der Erfassungsbereiche 600 - 606 möglich ist (vgl. hierzu auch die Pfeile rechts der Tabelle, die für jede Zeile der Tabelle die Reichweite in Bezug auf einen der Erfassungsbereiche 600-606 graphisch zeigen) und über die sich eine Person bzw. ein Gerät gegenüber einer Kontrolleinrichtung authentifizieren kann.

Bei den Kommunikationstechnologien handelt es sich gemäß der linken Spalte der Tabelle 610 von oben nach unten um:
- Kommunikation über Internetagenten, wobei der Erfassungsbereich im Prinzip unendlich groß ist, da eine Internetverbindung zur Kontrolleinrichtung aufgebaut wird,
- GSM, LAN, UMTS-Verbindungen, wobei die Reichweite sehr groß ist (bspw.
   innerhalb eines GSM-Netzes),
- WLAN (wireless local area network), W-USB (wireless universal serial bus)-Verbindungen, wobei die max. Reichweite bei etwa 25 m liegt,
- Bluetooth, Infrarot-Verbindungen mit einer Reichweite bis zu 15 m,
- RFID (Radio Frequency Identification), NFC (Near Field Communication)-Verbindungen mit einer Reichweite bis zu 5 m,
- Kontaktbehaftete Verbindungen, wobei eine Authentifizierung gegenüber der Kontrolleinrichtung mit einer Chipkarte oder einem Fingerprint erfolgt.

Ferner kann das Gerät so eingestellt sein, dass personenbezogene Daten nur an die Kontrolleinrichtung übermittelt werden, wenn eine entsprechende Kommunikationsverbindung zwischen der Kontrolleinrichtung und dem Gerät besteht. Verwendet das Gerät beispielsweise eine kontaktbehaftete Schnittstelle, so kann das Gerät bzw. die Person 608 nur detektiert werden, wenn es sich in unmittelbarer Nähe zur Kontrolleinrichtung befindet. Daher wird das Gerät bzw. die Person 608 bei Verwendung der kontaktbehaftete Schnittstellen nur innerhalb des Erfassungsbereichs 600 detektiert. Für diesen Bereich kann ferner festgelegt sein, dass selbst solche sensiblen Daten wie Fingerprints oder Irisabdrücke an die Kontrolleinrichtung übermittelt werden dürfen.

Verwendet das Gerät Funkschnittstellen, die zur Übertragung von kurzreichweitigen Signalen ausgelegt sind, wie etwa RFID, so kann das Gerät bzw. die Person 608 nur detektiert werden, wenn es sich nahe bei der Kontrolleinrichtung, d.h. innerhalb des Erfassungsbereichs 602, befindet. Für diesen Bereich kann ferner festgelegt sein, dass nicht solche sensiblen Daten wie Fingerprints an die Kontrolleinrichtung übermittelt werden dürfen, wohl aber der Name der Person oder das Geburtsdatum übertragen werden dürfen.

### Bezugszeichenliste

- 100: Kontrolleinrichtung
- 102: Gerät
- 104: Person
- 106: Mikroprozessor
- 108: Speicher
- 110: Iriskamera
- 112: Kommunikationsschnittstelle
- 114: Mikroprozessor
- 116: Speicher
- 118: Kommunikationsschnittstelle
- 120: Benutzeroberfläche
- 122: Eingabegerät
- 124: Computerprogrammprodukt
- 126: Computerprogrammprodukt
- 128: erstes Zertifikat
- 130: erste biometrische Daten
- 132: zweites Zertifikat
- 134: zweite biometrische Daten
- 136: erste Anfrage
- 138: zweite Anfrage
- 140: Kommunikationsschnittstelle
- 142: Luftschnittstelle
- 144: Name
- 146: Konfigurationsdaten
- 300: Gerät
- 304: RFID/NFC-Schnittstelle
- 304: Bluetooth-Schnittstelle
- 306: W-USB-Schnittstelle
- 308: WLAN-Schnittstelle
- 310: WiMAX-Schnittstelle
- 312: GSM-, GPRS-, UMTS-Schnittstelle
- 314: USB-Schnittstelle
- 316: Card Connector
- 318: Display
- 320: Tastatur
- 322: Fingerprint
- 324: Iris-Kamera
- 326: Unterschriftfeld
- 328: TPM-Modul
- 330: Akkumulator
- 332: Signaturkarte
- 334: Signaturmechanismen
- 336: Verschlüsselungsmechanismen
- 338: Biometrie-Algorithmen
- 340: Netzwerk-Protokolle
- 342: Benutzerinformationen
- 400: Gerät
- 402: Person
- 404: Kontrolleinrichtung
- 406: Signaturkarte
- 600: Erfassungsbereich
- 602: Erfassungsbereich
- 604: Erfassungsbereich
- 606: Erfassungsbereich
- 608: Person
- 610: Tabelle

## Patentansprüche

1. Verfahren zur Übertragung von Daten einer Person (104) an eine Kontrolleinrichtung (100), wobei die Person ein Gerät (102) mit sich trägt, wobei das Gerät zumindest erste und zweite Schnittstellen (118, 140) für die Kommunikation mit der Kontrolleinrichtung aufweist, wobei auf dem Gerät durch Konfigurationsdaten (146) festgelegt ist, über welche der ersten und zweiten Schnittstellen erste Daten (144) übertragen werden dürfen, wobei die Konfigurationsdaten nutzerdefinierbar sind, wobei das Gerät bei einer Annäherung an die Kontrolleinrichtung die folgenden Schritte ausführt:
- Empfang einer ersten Anfrage (136) von der Kontrolleinrichtung über die erste Schnittstelle, wobei mit der ersten Anfrage die Kontrolleinrichtung die ersten Daten der Person vom Gerät abfragt;
- Zugriff auf die Konfigurationsdaten;
- Überprüfung, ob die ersten Daten über die erste Schnittstelle übertragen werden dürfen, wobei eine notwendige Voraussetzung hierfür ist, dass die Konfigurationsdaten die Übertragung der Daten über die erste Schnittstelle erlauben;
- Übermittlung der ersten Daten über die erste Schnittstelle an die Kontrolleinrichtung, falls die ersten Daten über die erste Schnittstelle übertragen werden dürfen.

2. Verfahren nach Anspruch 1, wobei die ersten Daten (144) über die erste Schnittstelle nicht übertragen werden dürfen, wobei die ersten Daten über die zweite Schnittstelle übertragen werden dürfen, ferner mit den Schritten:
- Signalisierung an die Kontrolleinrichtung, dass die ersten Daten nicht über die erste Schnittstelle übertragen werden;
- Signalisierung an die Kontrolleinrichtung, dass die ersten Daten über die zweite Schnittstelle abfragbar sind.

3. Verfahren nach Anspruch 1, wobei die ersten Daten der ersten Schnittstelle und die zweiten Daten (144) der zweiten Schnittstelle zugeordnet sind, wobei die ersten Daten nur über die erste Schnittstelle übertragen werden dürfen, wobei die zweiten Daten nur über die zweite Schnittstelle übertragen werden dürfen.

4. Verfahren nach einem der vorhergehenden Ansprüche, wobei die erste Schnittstelle eine Kommunikation mit der Kontrolleinrichtung innerhalb eines ersten Abstands zwischen dem Gerät und der Kontrolleinrichtung ermöglicht, wobei die zweite Schnittstelle eine Kommunikation mit der Kontrolleinrichtung innerhalb eines zweiten Abstands zwischen dem Gerät und der Kontrolleinrichtung ermöglicht, wobei der erste Abstand kleiner ist als der zweite Abstand.

5. Verfahren nach einem der vorhergehenden Ansprüche, ferner mit den Schritten:
- Senden einer ereten Anfrage (136), wobei mit der ersten Anfrage die Kontrolleinrichtung ein erstes Zertifikat (128) zur Authentifizierung der Person, die das Gerät mit sich trägt, anfordert;
- Senden einer zweiten Anfrage (138) vom Gerät an die Kontrolleinrichtung, wobei mit der zweiten Anfrage ein zweites Zertifikat (132) von der Kontrolleinrichtung angefordert wird;
- Überprüfung des zweiten Zertifikats durch das Gerät, wobei über das zweite Zertifikat festgestellt wird, ob die Kontrolleinrichtung eine Berechtigung hat, die ersten Daten vom Gerät abzufragen;
- Übermittlung der ersten Daten an die Kontrolleinrichtung über die erste Schnittstelle nur, falls durch die Überprüfung des zweiten Zertifikats die Berechtigung der Kontrolleinrichtung festgestellt worden ist.

6. Verfahren nach -Anspruch 2,
wobei das Gerät von der Kontrolleinrichtung eine Authentifizierungsanforderung empfangen kann, wonach eine Authentifizierung der Person gegenüber dem Gerät erfolgen muss, und ferner mit dem Schritt der Authentifizierung der Person gegenüber dem Gerät, wobei die ersten Daten erst nach erfolgreicher Authentifizierung der Person gegenüber dem Gerät an die Kontrolleinrichtung übermittelt werden, wobei der Schritt der Authentifizierung der Person gegenüber dem Gerät nur dann durchgeführt wird, wenn die Authentifizierungsanforderung von dem Gerät empfangen worden ist, und wobei die ersten Daten ohne vorherige Authentifizierung der Person gegenüber dem Gerät an die Kontrolleinrichtung übermittelt werden, wenn die Authentifizierungsanforderung nicht von dem Gerät empfangen worden ist.

7. Verfahren nach Anspruch 6, ferner mit dem Schritt:
Senden einer ersten Anfrage (136), wobei mit der ersten Anfrage die Kontrolleinrichtung ein erstes Zertifikat (128) zur Authentifizierung der Person, die das Gerät mit sich trägt, anfordert, wobei die Authentifizierungsanforderung signiert ist, und wobei das Gerät die Signatur der Authentifizierungsanforderung verifiziert, bevor das erste Zertifikat an die Kontrolleinrichtung übermittelt wird.

8. Computerprogrammprodukt (126) mit computerausführbaren Instruktionen zur Durchführung des Verfahrens nach einem der vorhergehenden Ansprüche.

9. Portables Gerät (102) zur Übertragung von Daten einer Person an eine Kontrolleinrichtung (100) mit:
- zumindest einer ersten und zweiten Schnittstelle (118, 140) für die Kommunikation mit der Kontrolleinrichtung;
- Konfigurationsmitteln (146) zur benutzerdefinierbaren Festlegung der notwendigen Voraussetzungen dafür, dass über die erste Schnittstelle und über die zweite Schnittstelle erste Daten an die Kontrolleinrichtung übertragen werden dürfen, wobei das Gerät einen Speicher (116) umfasst, wobei der Speicher Konfigurationsdaten (146) umfasst, wobei die Konfigurationsdaten (146) festlegen, über welche der ersten und zweiten Schnittstellen erste Daten (144) übertragen werden dürfen:
- Mitteln (114, 126) zum Empfang einer ersten Anfrage (136) der Kontrolleinrichtung über die erste Schnittstelle, wobei mit der ersten Anfrage die Kontrolleinrichtung Daten der Person vom Gerät abfragt;
- Mitteln (114, 126) zur Überprüfung anhand der Festlegung, ob die Daten über die erste Schnittstelle übertragen werden dürfen;
- Mitteln (114,126) zur Übermittlung der Daten über die erste Schnittstelle an die Kontrolleinrichtung, falls die Daten über die erste Schnittstelle übertragen werden dürfen.

10. Gerät nach Anspruch 9, wobei die Daten über die erste Schnittstelle nicht übertragen werden dürfen, wobei die Daten über die zweite Schnittstelle übertragen werden dürfen, ferner mit:
- Mitteln (114, 126) zur Signalisierung an die Kontrolleinrichtung, dass die ersten Daten nicht über die erste Schnittstelle übertragen werden;
- Mitteln (114,126) zur Signalisierung an die Kontrolleinrichtung, dass die ersten Daten über die zweite Schnittstelle abfragbar sind.

11. Gerät nach Anspruch 9 oder 10, wobei die ersten Daten und/oder zweite Daten mit einem ersten Zertifikat an die Kontrolleinrichtung übertragbar sind, und mit Mitteln (126) zur Signierung der Daten mit einem dem ersten Zertifikat zugeordneten privaten Schlüssel des Geräts, wobei die Signatur der Daten zusammen mit den Daten an die Kontrolleinrichtung übertragen wird.

12. Gerät nach einem der vorhergehenden Ansprüche 9 bis 11, ferner mit:
- Mitteln (114, 126) zum Senden einer zweiten Anfrage 138) vom Gerät an die Kontrolleinrichtung, wobei mit der zweiten Anfrage ein zweites Zertifikat (132) von der Kontrolleinrichtung angefordert wird;
- Mitteln (114, 126) zur Überprüfung des zweiten Zertifikats durch das Gerät, wobei über das zweite Zertifikat festgestellt wird, ob die Kontrolleinrichtung eine Berechtigung hat, die ersten Daten vom Gerät abzufragen;
- Mitteln (114, 126) zur Übermittlung der ersten Daten an die Kontrolleinrichtung über die erste Schnittstelle nur, falls durch die Überprüfung des zweiten Zertifikats die Berechtigung der Kontrolleinrichtung festgestellt worden ist.

13. Gerät nach einem der vorhergehenden Ansprüche 9 bis 12, ferner mit Mitteln (114, 126) zum Empfang einer Authentifizierungsanforderung von der Kontrolleinrichtung, wobei nur nach erfolgreicher Authentifizierung der Person gegenüber dem Gerät die Daten an die Kontrolleinrichtung übermittelbar sind, wenn die Authentifizierungsanforderung empfangen worden ist, und wobei die Daten ohne vorherige Authentifizierung der Person an die Kontrolleinrichtung übermittelbar sind, wenn die Authentifizierungsanforderung nicht empfangen worden ist.

14. Gerät nach einem der vorhergehenden Ansprüche 9 bis 13, wobei es sich bei den ersten und zweiten Schnittstellen um Schnittstellen für eine kontaktlose oder kontaktbasierte Kommunikation mit der Kontrolleinrichtung handelt.

15. Dokument, insbesondere Wert- oder Sicherheitsdokument, z.B. ein Ausweis-dokument oder ein Berechtigungsdokument, mit einem integrierten Gerät nach einem der Ansprüche 9 bis 14.

## Claims

1. A method for transmitting data regarding an individual (104) to a control device (100), wherein the individual carries a unit (102), wherein the unit comprises at least first and second interfaces (118, 140) for communicating with the control device, wherein it is specified on the unit by way of configuration data (146) via which of the first and second interfaces first data (144) are allowed to be transmitted, wherein the configuration data can be defined by the user, wherein the unit carries out the following steps when approaching the control device:
- receiving a first inquiry (136) from the control device via the first interface, wherein the control device uses the first inquiry to query the unit about the first data regarding the individual;
- accessing the configuration data;
- checking whether the first data are allowed to be transmitted via the first interface, wherein a necessary prerequisite for this is that the configuration data allow the transmission of the data via the first interface; and
- transmitting the first data via the first interface to the control device if the first data are allowed to be transmitted via the first interface.

2. The method according to claim 1, wherein the first data (144) are not allowed to be transmitted via the first interface, wherein the first data are allowed to be transmitted via the second interface, further comprising the following steps:
- signaling to the control device that the first data are not transmitted via the first interface; and
- signaling to the control device that the first data can be queried via the second interface.

3. The method according to claim 1, wherein the first data are associated with the first interface and the second data (144) are associated with the second interface, wherein the first data are only allowed to be transmitted via the first interface, wherein the second data are only allowed to be transmitted via the second interface.

4. A method according to any one of the preceding claims, wherein the first interface enables communication with the control device within a first distance between the unit and the control device, wherein the second interface enables communication with the control device within a second distance between the unit and the control device, wherein the first distance is smaller than the second distance.

5. A method according to any one of the preceding claims, further comprising the following steps:
- sending a first inquiry (136), wherein the control device uses the first inquiry to request a first certificate (128) for authenticating the individual who carries the unit;
- sending a second inquiry (138) from the unit to the control device, wherein the second inquiry is used to request a second certificate (132) from the control device;
- checking the second certificate by the unit, wherein the second certificate is used to determine whether the control device is authorized to query the unit about the first data; and
- transmitting the first data to the control device via the first interface only if the authorization of the control device was determined by the checking of the second certificate.

6. The method according to claim 2,
wherein the unit can receive an authentication request from the control device, whereby the individual must be authenticated with respect to the unit, and further comprising the step of authenticating the individual with respect to the unit, wherein the first data are only transmitted to the control device after the individual has been successfully authenticated with respect to the unit, wherein the step of authenticating the individual with respect to the unit is only carried out if the authentication request has been received by the unit, and wherein the first data are transmitted to the control device without prior authentication of the individual with respect to the unit if the authentication request has not been received by the unit.

7. The method according to claim 6, further comprising the following step:
sending a first inquiry (136), wherein the control device uses the first inquiry to request a first certificate (128) for authenticating the individual who carries the unit, wherein the authentication request is signed, and wherein the unit verifies the signature of the authentication request before the first certificate is transmitted to the control device.

8. A computer program product (126), comprising instructions that can be executed by a computer for carrying out the method according to any one of the preceding claims.

9. A portable unit (102) for transmitting data regarding an individual to a control device (100), comprising:
- at least one first and a second interface (118, 140) for communicating with the control device;
- configuration means (116) for the user-definable specification of the necessary prerequisites for first data to be allowed to be transmitted to the control device via the first interface and via the second interface, wherein the unit comprises a memory (116), wherein the memory comprises configuration data (146), wherein the configuration data (146) specify via which of the first and second interfaces first data (114) are allowed to be transmitted;
- means (114, 126) for receiving a first inquiry (136) of the control device via the first interface, wherein the control device uses the first inquiry to query the unit about the data regarding the individual;
- means (114, 126) for checking, based on the specification, whether the data are allowed to be transmitted via the first interface; and
- means (114, 126) for transmitting the data via the first interface to the control device if the data are allowed to be transmitted via the first interface.

10. The unit according to claim 9, wherein the data are not allowed to be transmitted via the first interface, wherein the data are allowed to be transmitted via the second interface, further comprising:
- means (114, 126) for signaling to the control device that the first data are not allowed to be transmitted via the first interface; and
- means (114, 126) for signaling to the control device that the first data can be queried via the second interface.

11. The unit according to claim 9 or 10, wherein the first data and/or second data can be transmitted with the first certificate to the control device, and comprising means (126) for signing the data with a private key of the unit that is associated with the first certificate, wherein the signature of the data is transmitted together with the data to the control device.

12. A unit according to any one of the preceding claims, further comprising:
- means (114, 126) for sending a second inquiry (138) from the unit to the control device, wherein the second inquiry is used to request a second certificate (132) from the control device;
- means (114, 126) for checking the second certificate by the unit, wherein the second certificate is used to determine whether the control device is authorized to query the unit about the first data; and
- means (114, 126) for transmitting the first data to the control device via the first interface only if the authorization of the control device was determined by the checking of the second certificate.

13. A unit according to any one of the preceding claims 9 to 12, further comprising means (114, 126) for receiving an authentication request from the control device, wherein the data can only be transmitted to the control device after the individual has been successfully authenticated with respect to the unit if the authentication request has been received, and wherein the data can be transmitted to the control device without prior authentication of the individual if the authentication request has not been received.

14. A unit according to any one of the preceding claims 9 to 12, wherein the first and second interfaces are interfaces for non-contact or contact-based communication with the control device.

15. A document, in particular a value or security document, for example an identification document or an authorization document, comprising an integrated unit according to any one of claims 9 to 14.

## Revendications

1. Procédé pour la transmission de données d'une personne (104) vers un dispositif de contrôle (100), dans lequel la personne porte un appareil (102) sur elle, dans lequel l'appareil comporte au moins une première et une deuxième interface (118, 140) permettant de communiquer avec le dispositif de contrôle, dans lequel l'appareil permet de déterminer, par des données de configuration (146), par le biais de laquelle des première et deuxième interfaces les premières données (144) peuvent être transmises, dans lequel les données de configuration peuvent être définies par l'utilisateur, dans lequel l'appareil exécute les étapes suivantes, lors d'un rapprochement du dispositif de contrôle :
- réception d'une première requête (136) venant du dispositif de contrôle, par le biais de la première interface, où, avec la première requête, le dispositif de contrôle demande à l'appareil les premières données de la personne ;
- accès aux données de configuration ;
- vérification de la possibilité de transmettre les premières données par le biais de la première interface, à condition que les données de configuration permettent la transmission des données par la première interface ;
- transmission des premières données au dispositif de contrôle, par la première interface, dans la mesure où les premières données peuvent être transmises par la première interface.

2. Procédé selon la revendication 1, dans lequel les premières données (144) ne peuvent pas être transmises par la première interface, dans lequel les premières données peuvent être transmises par le biais de la deuxième interface, comprenant en outre les étapes suivantes :
- informer le dispositif de contrôle que les premières données ne peuvent pas être transmises par la première interface ;
- informer le dispositif de contrôle que les premières données peuvent être consultées par la deuxième interface.

3. Procédé selon la revendication 1, dans lequel les premières données sont attribuées à la première interface et les deuxièmes données (144) sont attribuées à la deuxième interface, dans lequel les premières données ne peuvent être transmises que par la première interface, dans lequel les deuxièmes données ne peuvent être transmises que par la deuxième interface.

4. Procédé selon l'une des revendications précédentes, dans lequel la première interface permet de communiquer avec le dispositif de contrôle sur une première distance entre l'appareil et le dispositif de contrôle, dans lequel la deuxième interface permet de communiquer avec le dispositif de contrôle sur une deuxième distance entre l'appareil et le dispositif de contrôle, dans lequel la première distance est inférieure à la deuxième distance.

5. Procédé selon l'une des revendications précédentes, comprenant en outre les étapes suivantes :
- envoi d'une première requête (136), où, avec la première requête, le dispositif de contrôle demande un premier certificat (128) pour l'authentification de la personne portant l'appareil sur elle ;
- envoi d'une deuxième requête (138) de l'appareil vers le dispositif de contrôle, où, avec la deuxième requête, le dispositif de contrôle demande un deuxième certificat (132) ;
- vérification du deuxième certificat par l'appareil, où le deuxième certificat permet de déterminer si le deuxième est autorisé à demander les premières données ;
- transmission des premières données au dispositif de contrôle, par la première interface, uniquement si la vérification du deuxième certificat a permis de déterminer l'autorisation du dispositif de contrôle.

6. Procédé selon la revendication 2,
dans lequel l'appareil peut recevoir une demande d'authentification venant du dispositif de contrôle, en vue d'une authentification de la personne par rapport à l'appareil, comprenant en outre l'étape d'authentification de la personne par rapport à l'appareil, dans lequel les premières données ne sont transmises au dispositif de contrôle qu'après l'authentification réussie de la personne par rapport à l'appareil, dans lequel l'étape d'authentification de la personne par rapport à l'appareil n'est exécutée qu'une fois que la demande d'authentification a été reçue par l'appareil, et dans lequel les premières données sont transmises au dispositif de contrôle sans authentification préalable de la personne par rapport à l'appareil, si la demande d'authentification n'a pas été reçue par l'appareil.

7. Procédé selon la revendication 6, comprenant en outre l'étape suivante :
envoi d'une première requête (136), où, avec la première demande, le dispositif de contrôle demande un premier certificat (128) pour l'authentification de la personne portant l'appareil sur elle, où la demande d'authentification étant signée, et où l'appareil vérifie la signature de la demande d'authentification, avant la transmission du premier certificat au dispositif de contrôle.

8. Produit de programme informatique (126) avec des instructions exécutables par ordinateur, pour la mise en oeuvre du procédé selon l'une des revendications précédentes.

9. Appareil portable (102) pour la transmission de données d'une personne à un dispositif de contrôle (100), avec :
- au moins une première et une deuxième interface (118, 140) permettant de communiquer avec le dispositif de contrôle ;
- des moyens de configuration (146) pour la détermination par l'utilisateur des conditions nécessaires pour que les premières données puissent être transmises au dispositif de contrôle par la première interface et par la deuxième interface, où l'appareil comprend une mémoire (116), où la mémoire comprend des données de configuration (146), où les données de configuration permettent de déterminer par laquelle des première et deuxième interfaces les premières données peuvent être transmises ;
- des moyens (114, 126) pour la réception d'une première requête (136) du dispositif de contrôle par le biais de la première interface, où, avec la première requête, le dispositif de contrôle demande à l'appareil des données de la personne ;
- des moyens (114, 126) pour vérifier, à l'aide de la détermination, si les données peuvent être transmises par la première interface ;
- des moyens (114, 128) pour la transmission des données au dispositif de contrôle par la première interface, dans la mesure où les données peuvent être transmises par la première interface.

10. Appareil selon la revendication 9, dans lequel les données ne peuvent pas être transmises par la première interface, dans lequel les données peuvent être transmises par la deuxième interface, comprenant en outre :
- des moyens (114, 126) pour informer le dispositif de contrôle que les premières données ne sont pas transmises par la première interface ;
- des moyens (114, 126) pour informer le dispositif de contrôle que les premières données peuvent être consultées par la deuxième interface.

11. Appareil selon la revendication 9 ou 10, dans lequel les premières données et/ou les deuxièmes données peuvent être transmises au dispositif de contrôle avec un premier certificat, et avec des moyens (126) permettant de signer les données à l'aide d'une clé privée de l'appareil attribuée au premier certificat, dans lequel la signature des données est transmise au dispositif de contrôle ensemble avec les données.

12. Appareil selon l'une des revendications précédentes 9 à 11, comprenant en outre :
- des moyens (114, 126) pour l'envoi d'une deuxième requête (138) de l'appareil au dispositif de contrôle, où, avec la deuxième requête, un deuxième certificat (132) est demandé par le dispositif de contrôle ;
- des moyens (114, 126) pour la vérification du deuxième certificat par l'appareil, où le deuxième certificat permet de déterminer si le dispositif de contrôle est autorisé à demander les premières données à l'appareil ;
- des moyens (114, 126) pour la transmission des premières données au dispositif de contrôle par le biais de la première interface, seulement si la vérification du deuxième certificat a permis de déterminer l'autorisation du dispositif de contrôle.

13. Appareil selon l'une des revendications précédentes 9 à 12, comprenant en outre des moyens (114, 126) pour la réception d'une demande d'authentification venant du dispositif de contrôle, dans lequel, après l'authentification réussie de la personne par rapport à l'appareil, les données peuvent être transmises au dispositif de contrôle, si la demande d'authentification a été reçue, et dans lequel les données peuvent être transmises au dispositif de contrôle sans authentification préalable de la personne par rapport à l'appareil si la demande d'authentification n'a pas été reçue.

14. Appareil selon l'une des revendications précédentes 9 à 13, dans lequel les première et deuxième interfaces sont des interfaces destinées à une communication sans contact ou avec contact avec le dispositif de contrôle.

15. Document, en particulier document de valeur ou de sécurité, par exemple une pièce d'identité ou une autorisation, avec un appareil intégré selon l'une des revendications 9 à 14.
